# EUROPÄISCHE PATENTANMELDUNG

(11) **EP 1 956 249 A2**
(43) Veröffentlichungstag der Anmeldung: **13.08.2008**
(21) Anmeldenummer: 08001163.8
(22) Anmeldetag: 23.01.2008
(51) Int. Cl.: F16B 5/00

(54) **Verbindungselement**

(30) Priorität: 07.02.2007 DE 102007006818
(71) Anmelder: SGL Carbon AG, 65203 Wiesbaden (DE)
(72) Erfinder: Guckert, Werner, 86674 Baar (DE); Heuer, Dirk, 86150 Augsburg (DE); Michels, Robert, 86672 Thierhaupten (DE); Zeuss, Rainer, 82110 Germering (DE)

(57) **Zusammenfassung**

Die Erfindung betrifft ein Verbindungselement (1) zum Fügen von metallischen, keramischen, polymeren und/oder faserverstärkten Bauteilen (4,5,10,11), die mindestens eine Fügefläche aufweisen, die mindestens eine Aussparung (6,12,13) und/oder eine Erhebung (7) mit einer Hinterschneidung (8,9,16,17) besitzen, wobei das Verbindungselement (1) aus einem in Form und Größe an die Aussparung (6,12,13) und/oder die Erhebung (7) der zu fügenden Bauteile (4,5,10,11) angepassten Verbindungselement (1) besteht, welches mindestens einen elastischen Randbereich (3) besitzt, der in einen form- und kraftschlüssigen Verbund zu den Aussparungen (6,12,13) und/oder Erhebungen (7) der zu fügenden Bauteile (4,5,10,11) gebracht werden kann.

## Beschreibung

Die Erfindung betrifft ein Verbindungselement zum Fügen von metallischen, keramischen, polymeren und/oder faserverstärkten Bauteilen, die mindestens eine ebene Fügefläche aufweisen, die mindestens eine Aussparung und/oder eine Erhebung mit einer Hinterschneidung besitzen. Die Erfindung betrifft weiterhin ein Verfahren zum Verbinden entsprechender Bauteile.

Im Stand der Technik sind verschiedene Verbindungselemente zum Fügen von Bauteilen bekannt, wobei zwischen reversiblen und irreversiblen Verbindungselementen unterschieden wird. Zu den reversiblen Verbindungselementen sind solche als Schraubverbindungen zu bezeichnende Verbindungselemente wie Schraube und Mutter oder Schraube und Gegengewinde oder Klemmverbindungen wie Druckknöpfe zu zählen. Unter den irreversiblen Verbindungselementen werden die verschiedenen Arten von Nieten, die für die Verbindung eine irreversible mechanische Umformung erfahren, verstanden. Eine gewisse Zwischenstellung dazu nehmen die insbesondere zur Verbindung von Kunststoffformteilen eingesetzten Schnapp-Verbindungen ein, bei denen in der Regel ein an ein Verbindungsteil angeformte Rastnase in eine Hinterschneidung im anderen Verbindungsteil eingepresst und eingerastet wird.

Die Erfindung hat sich die Aufgabe gestellt, ein Verbindungselement und ein Verfahren zur Verbindung von gattungsgemäß angegebenen Bauteilen zu beschreiben.

Erfindungsgemäß wird diese Aufgabe dadurch gelöst, dass das Verbindungselement zum Fügen von metallischen, keramischen, polymeren und/oder faserverstärkten Bauteilen, die mindestens eine Fügefläche aufweisen und die mindestens eine Aussparung und/oder eine Erhebung mit einer Hinterschneidung besitzen, aus einem in Form und Größe an die Aussparung und/oder die Erhebung der zufügenden Bauteile angepassten Verbindungselement besteht, welches mindestens einen elastischen Randbereich besitzt, wobei der Randbereich in einen form- und kraftschlüssigen Verbund zu den Aussparungen und/oder Erhebungen der zufügenden Bauteile gebracht werden kann.

Die Erfindung gestattet eine Verbindung von Bauteilen. Insbesondere bei Beanspruchungen, die zu Schwingungen in den verbundenen Bauteilen führen, kann die Schwingungsübertragung zwischen den verbundenen Bauteilen wirksam reduziert werden.

Das Verbindungselement besteht vorzugsweise aus Metall, Keramik, Polymer und/oder einem Verbundwerkstoff, dabei ist das Metall aus der Gruppe der Edelstähle, Werkzeugstähle, Einsatzstähle, Konstruktionsstähle, Eisen-Gusslegierungen, Hartmetallen sowie den Nichteisenmetallen wie z. B. Aluminium, Kupfer, Platinmetallen, Tantal und Titan ausgewählt.

Bei Verwendung von Keramik als Verbindungselement ist diese aus der Gruppe der Hartstoffe wie Sinterkorund, SiC-Keramik, Siliciumnitrid-Keramik und den Hartstoff-Metall-Sinterverbundwerkstoffen (Cermets) ausgewählt, die Polymere sind ausgewählt aus der Gruppe der technischen Thermoplaste wie Polyamid 6 (PA 6), Polyamid 6.6 (PA 66), Polyoxymethylen (POM) oder der Duromere wie Epoxydharze (EP), MelaminFormaldehyd-Harze (MF), ungesättigte Polyesterharze (UP) und bei Verwendung eines Verbundwerkstoffs als Verbindungselement ist dieser aus der Gruppe der glasfaserverstärkten Kunststoffe (GFK), der kohlenstofffaserverstärkten Kunststoffe (CFK) und der borfaserverstärkten Kunststoffe (BFK) ausgewählt.

Das Verbindungselement besteht in besonders bevorzugter Weise aus einer Grafitfolie mit einer Dicke von 0,25 mm bis 3 mm, dessen Randbereich mit einem Blech eingefasst ist.

Vorteilhafter Weise ist das Verbindungselement gewellt oder eben und weist eine Dicke von 0,10 mm bis 5 mm, vorzugsweise 0,2 mm bis 3 mm, auf.

In besonders bevorzugter Weise besitzt das Verbindungselement eine rotationssymmetrische Form.

Das erfindungsgemäße Verfahren zum Fügen von metallischen, keramischen, polymeren und/oder faserverstärkten Bauteilen, die mindestens eine ebene Fügefläche aufweisen und mindestens eine Aussparung und/oder eine Erhebung mit einer Hinterschneidung besitzen, besteht darin, dass das in Form und Größe an die Aussparung und/oder die Erhebung der zufügenden Bauteile angepasste, im wesentlichen ebene Verbindungselement mindestens einen elastischen Randbereich besitzt, der durch Verpressung der Teile gegeneinander in einen form- und kraftschlüssigen Verbund zu den Aussparungen und/oder Erhebungen der zufügenden Bauteile gebracht wird, wobei der Winkel der Hinterschneidung α an die zu fügenden Bauteile vorzugsweise im Bereich von 20° bis 60° liegt.

Vorteilhafter Weise findet die Umformung bei Raumtemperatur auf Standardpressen statt.

Die Erfindung wird nachfolgend an Hand von drei Ausführungsbeispielen und sechs Figuren näher erläutert, ohne das dadurch der zu Grunde liegende Erfindungsgedanke beschränkt werden soll.

Es zeigen:
- Figur 1: - erste Ausführungsform eines erfindungsgemäßen Verbindungselements - Graphitfolie mit Blech eingefasst
- Figur 2: - Querschnitt durch das Verbindungselement in der ersten Ausführungsform
- Figur 3.1: - Schnitt durch zwei mittels einer zweiten Ausführungsform des erfindungsgemäßen Verbindungselements verbundene Bauteile - gewellter Ring
- Figur 3.2: - vergrößerter Ausschnitt aus der Figur 3.1
- Figur 4.1: -Schnitt durch zwei zuverbindende Bauteile mit hinterschnittenen Aussparungen
- Figur 4.2 -: vergrößerter Ausschnitt aus der Figur 4.1
- Figur 5 -: Draufsicht eines Bauteils mit hinterschnittener Aussparung
- Figur 6 -: Draufsicht eines weiteren Bauteils mit hinterschnittener Aussparung

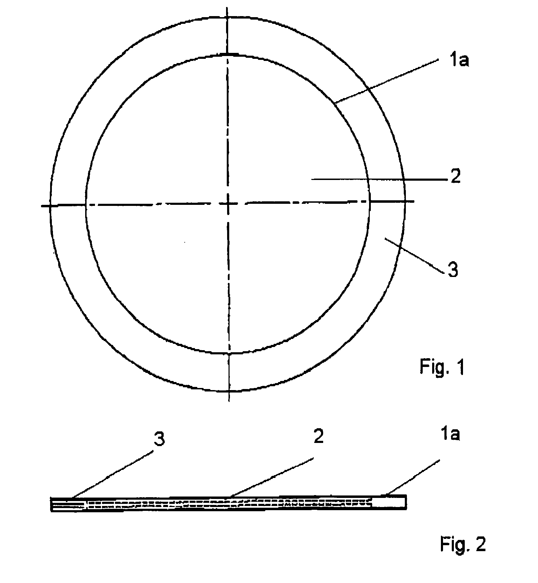

Figur 1 zeigt ein Verbindungselement 1a bestehend aus einer Graphitfolie 2, die mit einem Stahlblech umbördelt ist, welches den elastischen Randbereich 3 bildet.

Figur 2 zeigt den Querschnitt durch das Verbindungselement 1 a gemäß Figur 1.

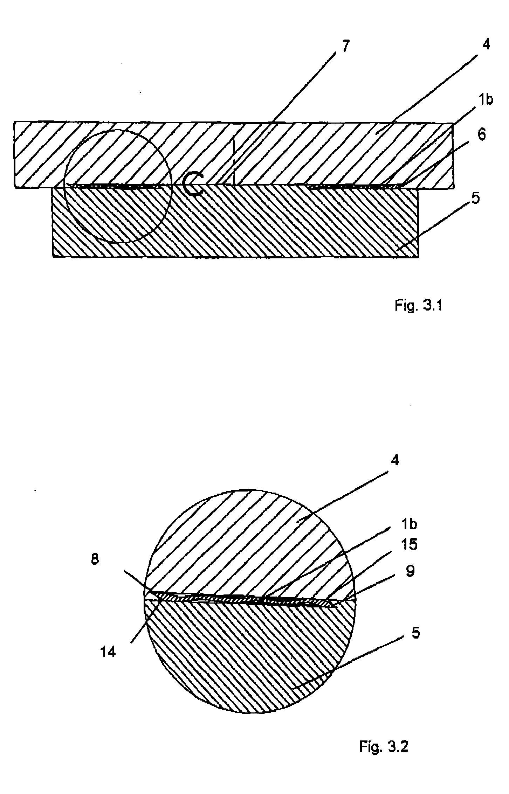

Figur 3.1 zeigt ein Verbindungselement 1 b bestehend aus einem in radialer Richtung gewellten Ringelement, das zwischen zwei Bauteile 4, 5 eingefügt ist, wobei das Bauteil 4 mit einer Aussparung 6 und das Bauteil 5 mit einer Erhebung 7 versehen ist und die Ränder der Aussparung 6 und der Erhebung 7 jeweils mit einer Hinterschneidung 8, 9 versehen sind.

Figur 3.2 zeigt die vergrößerte Darstellung des Verbindungsbereichs der Bauteile 4, 5. Das Verbindungselement 1b greift dabei mit der äußeren Umfangskante in die Hinterschneidung 8 des Bauteils 4 und mit der inneren Kante in die Hinterschneidung 9 des Bauteils 5 ein.

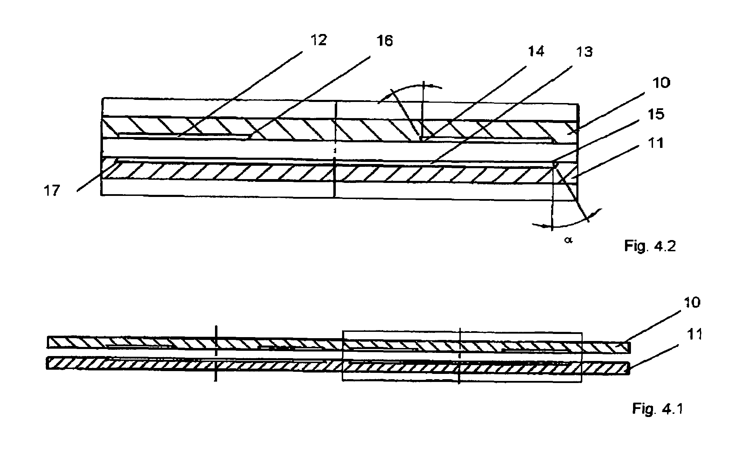

Figur 4.1 zeigt den Querschnitt durch zwei weitere zu verbindende Teile 10, 11.

Figur 4.2 zeigt einen vergrößerten Teilausschnitt der Figur 4.1. Die zu verbindenden Teile 10, 11 weisen die Aussparungen 12, 13 auf. Der Rand 14, 15 der Aussparungen 12, 13 ist mit einer Hinterschneidung 16, 17 versehen.

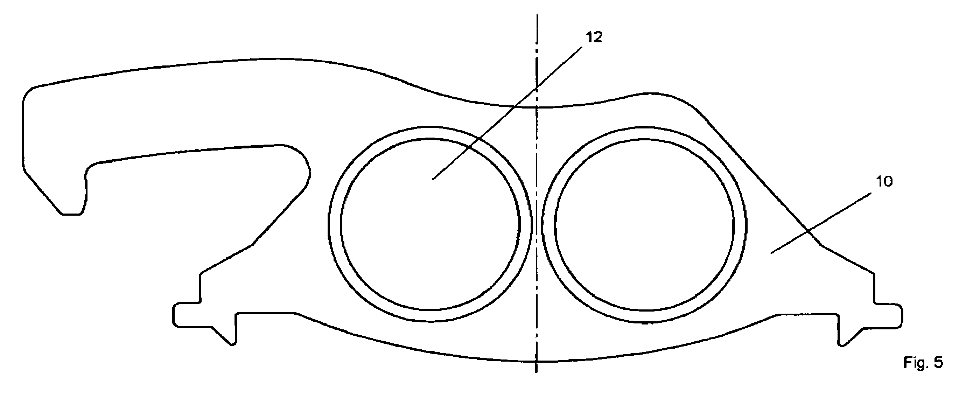

Figur 5 zeigt die Draufsicht auf das zu verbindende Teil 10, das mit zwei kreisförmigen Aussparungen 12 versehen ist.

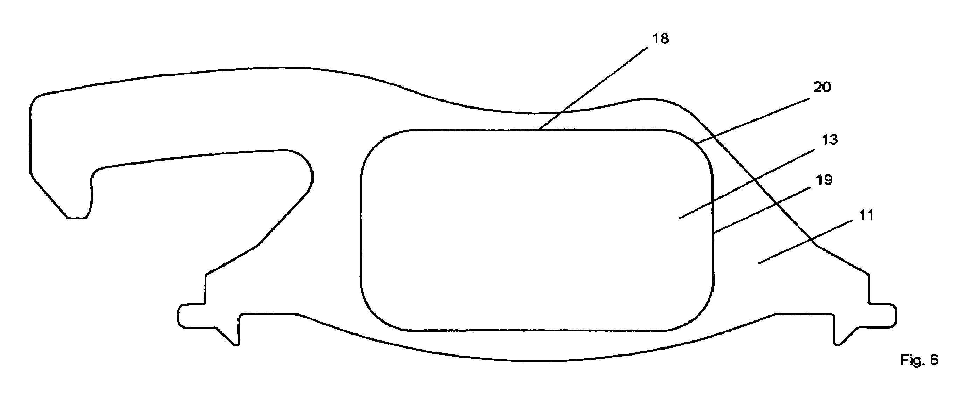

Figur 6 zeigt die Draufsicht auf das zu verbindende Teil 11, welches mit einer im wesentlichen rechteckigen Aussparung 13 versehen ist, wobei der Übergang der geraden Kanten 18, 19 des Randes 15 der Aussparung 13 durch eine Kreissegmentlinie 20 erfolgt.

### Beispiel 1

Aus einer 2 mm dicke Graphitfolie 2, die eine interne Blech- oder Faserverstärkung aufweisen kann, werden kreisförmige Scheiben mit einem Durchmesser von 50 mm ausgestanzt. Der äußere Rand der Scheiben wird mit einem 0,15 mm dicken Stahlblech ummantelt, das einen ca. 3 mm breiten Streifen überdeckt und soweit eingepresst ist, dass eine bündige Oberfläche gebildet wird.
Dieses Verbindungselement 1 a wird zwischen zwei zu verbindende Teile gelegt, die jeweils kreisförmige Vertiefungen (Aussparungen) 6 von ca. 0,6 mm und 50 mm Durchmesser aufweisen und deren Vertiefungsränder 14 mit einer Hinterschneidung 8 von 45° versehen sind. Das Verbindungselement 1a wird auf einer Standardpresse in die Vertiefungen 6 der zu verbinden Teile eingepresst und so eine feste und Schwingungen der verbundenen Teile reduzierende Verbindung hergestellt.

### Beispiel 2

Das Verbindungselement 1 b, bestehend aus einem 0,2 mm Stahlblechring mit einem äußeren Durchmesser von 50 mm und einem inneren Durchmesser von 25 mm, wird mit einer gleichmäßigen, sich in radialer Richtung erstreckender Wellung versehen, wobei die zwischen den Wellenkämmen der beiden Seiten gemessene scheinbare Dicke des Verbindungselements 1 b ca. 0,5 mm beträgt.
Dieses Verbindungselement 1 b wird zwischen zwei zu verbindende Teile 4, 5 gelegt, die einerseits eine kreisförmige Vertiefung 6 von ca. 0,4 mm und 50 mm Durchmesser aufweisen und deren Vertiefungsränder 14 mit einer Hinterschneidung 8 von 30 ° versehen sind und andererseits mit einer ca. 0,4 mm hohen kreisförmigen Erhebung 7 mit einem Durchmesser von 25 mm versehen sind, wobei der Rand 19 der Erhebung 7 gleichfalls eine Hinterschneidung 9 von 30 ° aufweist. Das Verbindungselement 1 b wird auf einer Standardpresse mit den zu verbinden Teile 4, 5 verpresst und so eine feste und Schwingungen der verbundenen Teile 4, 5 reduzierende Verbindung hergestellt, bei der die zueinander gerichteten Oberflächen der verbundenen Teile 4, 5 nach dem Verpressen einen maximalen Abstand von ca. 50 - 100 µm aufweisen können.

### Beispiel 3

Das Verbindungselement, bestehend aus einem 0,2 mm Stahlblechring mit einem äußeren Durchmesser von 50 mm, der einen zu äußeren Rand weisenden U-förmigen Querschnitt besitzt, wobei die Gesamtdicke des Verbindungselements ca. 1 mm beträgt.
Dieses Verbindungselement wird zwischen zwei zu verbindende Teile gelegt, die jeweils kreisförmige Vertiefungen von ca. 1 mm und 50 mm Durchmesser aufweisen und deren Vertiefungsrand mit einer Hinterschneidung von 30 ° versehen ist. Das Verbindungselement wird auf einer Standardpresse in die Vertiefungen der zu verbinden Teile eingepresst und so eine feste und Schwingungen der verbundenen Teile reduzierende Verbindung hergestellt.

### Bezugszeichenliste

- 1, 1a, 1b -: Verbindungselement
- 2 -: Graphitfolie
- 3 -: elastischer Randbereich
- 4 -: Bauteil
- 5 -: Bauteil
- 6 -: Aussparung
- 7 -: Erhebung
- 8 -: Hinterschneidung
- 9 -: Hinterschneidung
- 10 -: Bauteil
- 11-: Bauteil
- 12 -: Aussparung
- 13 -: Aussparung
- 14 -: Rand
- 15 -: Rand
- 16 -: Hinterschneidung
- 17 -: Hinterschneidung
- 18 -: Kante
- 19 -: Kante
- 20 -: Kreissegmentlinie

## Patentansprüche

1. Verbindungselement (1) zum Fügen von metallischen, keramischen, polymeren und/oder faserverstärkten Bauteilen (4, 5, 10, 11), die mindestens eine Fügefläche aufweisen, die mindestens eine Aussparung (6, 12, 13) und/oder eine Erhebung (7) mit einer Hinterschneidung (8,9,16,17) besitzen, **dadurch gekennzeichnet, dass** das Verbindungselement (1) aus einem in Form und Größe an die Aussparung (6, 12, 13) und/oder die Erhebung (7) der zufügenden Bauteile (4, 5, 10, 11) angepassten Verbindungselement (1) besteht, welches mindestens einen elastischen Randbereich (3) besitzt, der in einen form- und kraftschlüssigen Verbund zu den Aussparungen (6, 12, 13) und/oder Erhebungen (7) der zufügenden Bauteile (4, 5,10,11) gebracht werden kann.

2. Verbindungselement (1) nach Anspruch 1, **dadurch gekennzeichnet, dass** das Verbindungselement (1) aus einem Metall, einem Polymer, einer Keramik und/oder einem Verbundwerkstoff besteht.

3. Verbindungselement (1) nach Anspruch 2, **dadurch gekennzeichnet, dass** das Metall ausgewählt ist aus der Gruppe der Edelstähle, Werkzeugstähle, Einsatzstähle, Konstruktionsstähle, Eisen-Gusslegierungen, Hartmetallen sowie den Nichteisenmetallen.

4. Verbindungselement (1) nach Anspruch 2, **dadurch gekennzeichnet, dass** die Keramik ausgewählt ist aus der Gruppe der Hartstoffe wie Sinterkorund, Siliciumcarbid-Keramik, Siliciumnitrid-Keramik und den Hartstoff-Metall-Sinterverbundwerkstoffen.

5. Verbindungselement (1) nach Anspruch 2, **dadurch gekennzeichnet, dass** das Polymer ausgewählt ist aus der Gruppe der technischen Thermoplaste oder der Duromere.

6. Verbindungselement (1) nach Anspruch 2, **dadurch gekennzeichnet, dass** der Verbundwerkstoff ausgewählt ist aus der Gruppe der glasfaserverstärkten Kunststoffe, der kohlenstofffaserverstärkten Kunststoffe und der borfaserverstärkten Kunststoffe.

7. Verbindungselement (1) nach Anspruch 2, **dadurch gekennzeichnet, dass** das Verbindungselement (1) aus einer Grafitfolie (2) mit einer Dicke von 0,25 mm bis 3 mm besteht, dessen Randbereich (3) mit einem Blech eingefasst ist.

8. Verbindungselement (1) nach einem der Ansprüche 1 bis 6, **dadurch gekennzeichnet, dass** das Verbindungselement (1) gewellt, gekrümmt oder eben ist.

9. Verbindungselement (1) nach einem der Ansprüche 1 bis 8, **dadurch gekennzeichnet, dass** das Verbindungselement (1) eine Dicke von 0,10 mm bis 5 mm, vorzugsweise 0,2 mm bis 3 mm, aufweist.

10. Verbindungselement (1) nach Anspruch 1 bis 9, **dadurch gekennzeichnet, dass** das Verbindungselement (1) eine rotationssymmetrische Form besitzt.

11. Verfahren zum Fügen von metallischen, keramischen und/oder faserverstärkten Bauteilen (4,5,10,11), die mindestens eine ebene Fügefläche aufweisen und mindestens eine Aussparung (6, 12, 13) und/oder eine Erhebung (7) mit einer Hinterschneidung (8, 9, 16, 17) besitzen, **dadurch gekennzeichnet, dass** das in Form und Größe an die Aussparung (6, 12, 13) und/oder die Erhebung (7) der zufügenden Bauteile (4, 5, 10, 11) angepasste, im wesentlichen ebene Verbindungselement (1) mindestens einen elastischen Randbereich (3) besitzt, der durch Verpressung der Teile gegeneinander in einen form- und kraftschlüssigen Verbund zu den Aussparungen (6, 12, 13) und/oder Erhebungen (7) der zufügenden Bauteile (4, 5, 10, 11) gebracht wird, wobei der Winkel der Hinterschneidung (8, 9, 16, 17) α an den zu fügenden Bauteilen (4, 5, 10, 11) im Bereich von 20° bis 60° liegt.

12. Verfahren nach Anspruch 11, **dadurch gekennzeichnet, dass** die Umformung bei Raumtemperatur auf Standardpressen stattfindet.
